# DEMANDE DE BREVET EUROPEEN

(11) **EP 1 923 822 A1**
(43) Date de publication de la demande: **21.05.2008**
(21) Numéro de dépôt: 06301139.9
(22) Date de dépôt: 09.11.2006
(51) Int. Cl.: G06K 19/077, B42D 15/00, G07D 7/00

(54) **Procédé de réalisation d'un élément de circuit électrique ou électronique sécurisé, élément obtenu et support intégrant ledit élément**

(71) Demandeur: GEMPLUS, 13420 Gémenos (FR)
(72) Inventeur: Robles, Laurence, 83640 Saint Zacharie (FR); Banchelin, Xavier, 13012 Marseille (FR)

(57) **Abrégé**

La présente invention concerne procédé de réalisation d'un élément de circuit électrique ou électronique sécurisé, dans lequel la sécurisation est obtenue à l'aide d'un moyen d'authentification associé à l'élément;

Le procédé se distingue en ce qu'il comprend une étape d'association d'un fil de sécurité (3) directement à l'élément de circuit (7, 17, 21, 25, 31), le fil de sécurité comportant le moyen d'authentification (5).

L'invention concerne également l'élément obtenu et support intégrant un tel élément.

## Description

La présente invention concerne un procédé de réalisation d'un élément de circuit électrique ou électronique sécurisé à l'aide d'un moyen d'authentification associé à l'élément de circuit. L'invention concerne également l'élément de circuit obtenu et un support sécurisé intégrant un tel élément.

Elle vise en particulier un procédé pour la sécurisation de support ayant une interface de communication électromagnétique et le support ainsi sécurisé.

L'invention trouve application notamment dans le domaine des supports d'identification de personne ou d'objet, de type sans contact, tels que carte d'identité, passeport, permis de conduire, carte santé, carte de véhicule, certificat d'authenticité, étiquette électronique etc.

De tels supports comprennent déjà des éléments de sécurité associés étroitement au support et présentés sous forme de fils torsadés avec un ou plusieurs fils de couleur de manière à reproduire un motif coloré reconnaissable par une autorité ou une entité souhaitant exercer un contrôle de l'authenticité du support.

Dans un passeport, il est connu de fixer les feuilles composant le feuillet au niveau de la charnière du feuillet avec un ou plusieurs fils de sécurité du type ci-dessus, présentant de tels signes ou marque d'authentification et cousu avec un autre fil de maintien des feuilles. Ce fil de sécurité est visible sur la charnière à l'ouverture du passeport à son milieu. Dans certains cas, ces fils comprennent des substances sensibles au rayonnement notamment ultra-violet (UV), et/ou sont fluorescentes. Dans un certain pays, un code couleur bleu et blanc fluorescent compose le fil de sécurité utilisé dans la charnière du passeport.

Tous les documents d'identification sont en principe dotés de moyens pour faire face aux problèmes de contrefaçon, toutefois, les inventeurs ont constaté qu'il n'existe pas de protection économique contre la fraude de la technologie réalisant la fonction de communication électromagnétique du passeport.

En effet, tout particulièrement dans un passeport électronique comportant une antenne électromagnétique reliée à une puce électronique pour former un transpondeur à radiofréquence, il est possible de substituer ou de cloner la puce et/ou l'antenne simplement en délaminant ou décollant le transpondeur généralement disposé sur un support communément appelé insert ou "inlay" électromagnétique.

Cette fraude de substitution physique ou opération de clonage peut viser tout support de type sans-contact, à transpondeur (avec puce) ou à antivol (sans puce), ainsi que toute étiquette électronique, module électronique. La fraude peut concerner la substitution d'un élément conducteur, d'un composant électrique et/ou électronique.

Concernant les composants électroniques, il est connu d'intégrer des codes numériques d'identification dans des mémoires comme des certificats cryptographiques mais ils ne sont pas visibles d'un premier coup d'oeil.

L'invention a pour objectif général de proposer une sécurisation d'élément de circuit électrique et/ ou électronique facilement détectable et à mettre en oeuvre.

L'invention a également pour objectif de proposer la protection contre la fraude des moyens participant à une fonction de communication électromagnétique comprenant des moyens sensibles à la réception et/ou aptes à émettre des ondes électromagnétiques à l'aide d'une antenne.

Plus particulièrement, l'invention a pour objectif de proposer une solution de sécurisation des inserts sans-contact dits "inlays" destinés à être utilisés pour des produits sans-contact tels des passeports électroniques, dont certains sont notamment compatibles avec l'ISO 14443.

A cet effet, l'invention consiste dans son concept à associer ou attacher à l'élément de circuit un fil de sécurité comportant des moyens d'authentification. Un fil proche de ce fil de sécurité étant utilisé dans le domaine de l'imprimerie sécurisée ou par exemple dans les reliures de passeport, il doit cependant être adapté à l'élément de circuit à protéger et aux conditions d'utilisation de cet élément.

Plus précisément, l'invention consiste à entremêler ou associer un ou plusieurs fils de sécurité ou sécuritaires au fil conducteur de l'antenne.

La sécurité est obtenue par le recours à des éléments sensibles introduits par exemple par dopage dans des fils de sécurité, le recours à des matières sensibles aux UV, IR, fluorescentes ou le recours à des traceurs, utilisant de préférence mais pas nécessairement pour leur détection, des longueurs d'ondes dans le domaine non visible à l'oeil nu.

A cet effet, l'invention a d'abord pour objet un procédé de réalisation d'un élément de circuit électrique ou électronique sécurisé, dans lequel la sécurisation est obtenue à l'aide d'un moyen d'authentification associé à l'élément; Le procédé se distingue en ce qu'il comprend une étape d'association d'un fil de sécurité directement à l'élément de circuit, le fil de sécurité comportant le moyen d'authentification.

Contrairement à l'art antérieur où le fil de sécurité est associé à un support non fonctionnel électriquement, l'invention associe directement ce fil de sécurité à un élément conducteur électrique. Cette association à un fil non conducteur ne vient pas naturellement à l'esprit car à priori, il ne va pas dans le sens d'une amélioration de la fonction électrique et/ou électronique proprement dite et donc n'est pas souhaité de premier abord. Il n'assure pas non plus directement une fonction de tenue mécanique comme dans une liaison de feuilles d'un passeport.

Dans la plupart des cas de l'invention, l'association est directe du fait d'un contact établi entre le fil de sécurité et l'élément de circuit. Dans le meilleur des cas, une fusion ou assemblage entre eux difficilement démontable est préféré.

Selon d'autres caractéristiques du procédé :
- l'étape d'association est réalisée sur un fil conducteur en tant qu'élément de circuit, en formant un fil hybride comportant le fil de sécurité et le fil conducteur;
- le fil hybride est obtenu par retordage d'au moins un fil de sécurité avec au moins un fil conducteur;
- le fil hybride est obtenu par retordage d'au moins un fil conducteur autour d'au moins un fil âme de manière que le fil conducteur soit enroulé en spirale autour d'un fil d'âme;
- l'étape d'association s'effectue en cousant ou brodant l'élément de circuit sur un support à l'aide d'un fil de sécurité participant à la couture ou la broderie;
- l'élément de circuit est une antenne et l'étape d'association est réalisée lors de l'élaboration du fil d'antenne sous forme de fil hybride, ledit fil hybride comportant au moins un fil de sécurité et un fil conducteur.
- l'élément de circuit comporte ou est relié à des plots ou plages de contact, et en ce que l'extrémité du fil de sécurité est attachée ou bloquée par une soudure sur le plot ou plage de connexion.

L'invention a également pour objet un procédé de réalisation d'un support sécurisé, ledit support comprenant au moins un élément de circuit et un fil de sécurité associé au support.

Le procédé se distingue en ce que la sécurisation du support s'effectue par l'intermédiaire d'un élément de circuit sécurisé associé au support, ledit circuit sécurisé étant conforme au procédé selon l'une des revendications précédentes.

Le procédé est particulièrement avantageux dans la réalisation d'une antenne dans la mesure où dans une même opération de formation de l'antenne sur un support on effectue la sécurisation. En particulier par couture ou broderie, on vient former les spires d'antenne soit avec du fil conducteur déjà sécurisé, soit avec du fil de sécurité employé par exemple comme fil de couture ou de broderie.

Lorsque l'antenne déjà sécurisée est amenée à fixer ou attacher en plus un composant tel qu'un module à puce, on étend la sécurisation au module, l'antenne sécurisée servant elle-même d'élément de sécurisation du module puisque ce fil de couture sécurisé est attaché au module.

L'invention a également pour objet un élément de circuit électrique ou électronique sécurisé à l'aide d'un moyen d'authentification associé à l'élément; L'élément de circuit se distingue en ce qu'il comprend un fil de sécurité attaché à l'élément de circuit, le fil de sécurité comportant ledit moyen d'authentification.

Selon d'autres caractéristiques ou modes de réalisation :
- l'élément de circuit comprend un fil hybride comportant le fil de sécurité et le fil conducteur;
- le fil hybride comporte au moins un fil de sécurité retordu avec au moins un fil conducteur;
- le fil hybride comporte le fil conducteur enroulé en spirale autour d'au moins un fil d'âme;
- l'élément de circuit est fixé sur un support par une technique de couture ou de broderie à l'aide d'un fil de sécurité participant à la couture ou la broderie;
- l'élément de circuit est choisi parmi un fil conducteur, une antenne, un plot ou plage de connexion d'un composant électronique;
- l'antenne est formée à partir d'un fil hybride, ledit fil hybride comportant au moins un fil de sécurité et un fil conducteur.

L'invention a également pour objet un support sécurisé, ledit support comprenant au moins un élément de circuit et un fil de sécurité comportant un moyen d'authentification.
Le support est caractérisé en ce que l'élément de circuit est conforme aux caractéristiques ci-dessus.

Selon d'autres caractéristiques ou mode de réalisation du support sécurisé, comportant l'antenne en fil hybride :
- au moins une extrémité de l'antenne est fixée à au moins un plot ou plage de connexion d'un composant électronique de manière que l'extrémité du fil de sécurité soit fixée sur le plot de connexion;
- l'extrémité du fil de sécurité est bloquée ou attachée par une soudure sur le plot ou plage de connexion;
- le support sécurisé comportant un élément de circuit électrique ou électronique constitue tout ou partie d'un insert ou inlay sans contact; il peut constituer tout ou partie d'un support d'identification tel qu'un passeport, une carte d'identité.

D'autres caractéristiques et avantages de l'invention apparaîtront à la lecture de la description détaillée qui suit et qui est fournie en référence aux dessins annexés, dans lesquels:
- la fig. 1 illustre un mode de réalisation d'un fil hybride conforme à l'invention;
- la fig. 2 illustre un mode de fixation du fil hybride sur un support conformément à l'invention;
- la fig. 3 illustre un mode de réalisation d'un insert pour produit d'identification sans contact;
- les fig. 4 à 7 illustrent différents modes d'association d'un fil de sécurité à un composant électronique ou électrique;
- la fig. 8 illustre une étape de lamination d'un insert entre deux feuilles;
- la fig. 9 illustre un passeport comportant l'insert de la figure 8.

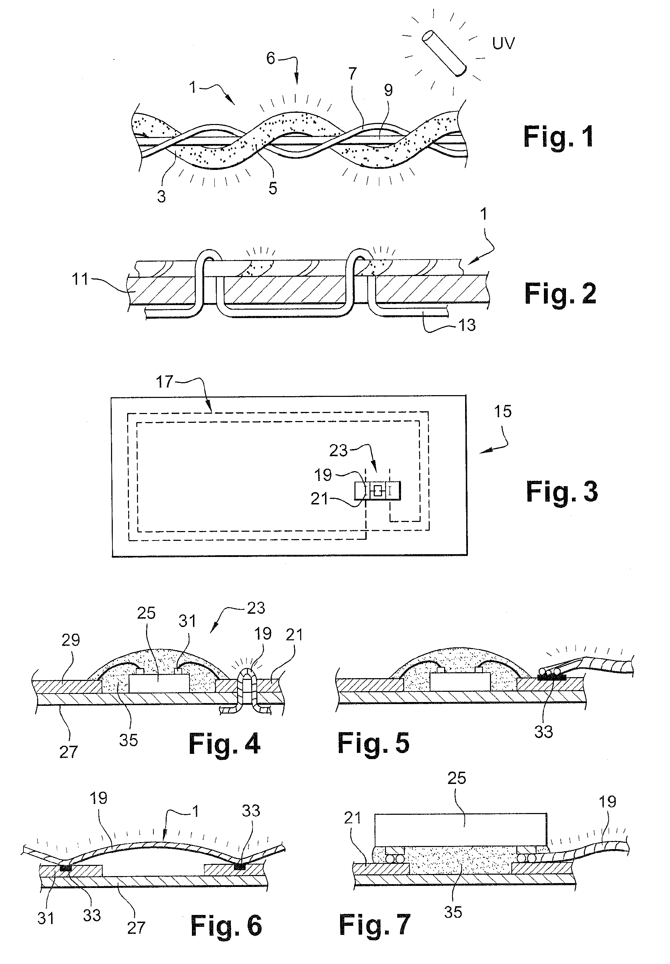

A la figure 1, on a illustré un élément de circuit électrique sécurisé 1, conforme à un mode de réalisation de l'invention et exposé au rayonnement d'une lampe UV.

Cet élément de circuit 1 comprend dans l'exemple tout d'abord un fil conducteur basique 7, notamment en cuivre, en or pouvant être utilisé comme un élément de connexion électrique, une résistance, une antenne, etc. Il comprend également, selon l'invention, un fil de sécurité 3 attaché à l'élément de circuit 7; le fil de sécurité comporte un moyen d'authentification 5 comme expliqué ci-après.

Par fil de sécurité, on entend dans la description, tout fil utilisé en particulier dans la sécurisation de support d'identification tel un passeport, billet de banque. Le fil de sécurité a la forme d'un élément longiligne s'étendant sur une longueur donnée, généralement de section sensiblement ronde mais peut avoir une section déformable notamment lorsqu'il est composé de fibres, une section rectangulaire comme celle d'un ruban. Le fil peut être en diverses matières notamment en matière naturelle tel que le coton ou synthétique notamment en polymère comme le polyamide. Le fil de sécurité 7 comporte des moyens d'authentification. Dans l'exemple les moyens d'authentifications sont des éléments ou particules sensibles 5; Ils peuvent être aussi des agents dopants comprenant des matières sensibles aux UV, IR, fluorescentes ou des traceurs. Ces moyens d'authentification émettent un rayonnement 6, de préférence, sous l'effet de longueurs d'onde appartenant au domaine non visible à l'oeil nu, tel l'ultra-violet (UV) afin d'augmenter la difficulté de fraude.

Dans une variante, le fil peut comporter simplement une succession de fils de couleur bobinés ensemble ou non, présentés dans un ordre déterminé de manière à produire un code couleur visible et reconnaissable à l'oeil nu.

Selon le mode de réalisation préféré, l'élément de circuit sécurisé, comprend un fil hybride comportant au moins deux fils, le fil de sécurité et le fil conducteur. Dans l'exemple de la figure 1, le fil hybride comporte trois fils, respectivement un fil de sécurité 3 retordu avec au moins un fil conducteur 7 autour d'un fil d'âme en particulier un fil en polyamide 9.
L'attache du fil de sécurité au fil conducteur s'effectue ici par une opération de retordage.

De préférence, c'est le fil conducteur 7 qui est enroulé en spirale autour d'au moins un fil d'âme 9 présentant notamment des caractéristiques de rigidité et fixation ou d'attache dans les supports, par exemple par procédé de couture.
L'âme peut être formée aussi par le fil de sécurité qui est alors emprisonné dans le fil conducteur. Alternativement, le fil conducteur peut servir d'âme et le fil de sécurité est spiralé autour.

Le fil conducteur est dimensionné de manière à satisfaire des caractéristiques nécessaires à une communication radiofréquence (RF), et le fil de sécurité est marqué de manière à constituer un élément de sécurité. Le fil de sécurité peut être ou non un fil structurel dans le sens respectivement où il participe ou non directement au maintien du fil conducteur sur un support.

Dans le cas où ce fil hybride participe à une technologie d'antenne cousue sur un support tissé ou non tissé, le poids du fil de sécurité est de préférence compris entre 15% et 40 % du poids total du fil hybride, le poids global du fil hybride pouvant varier de 400 à 600 dtex, 1 dtex étant égal à 1 g / 10000 m.

Le fil hybride peut comprendre par exemple deux fils de sécurité totalisant à eux deux de 80 à 160 dtex auxquels s'ajoute le fil de cuivre.
Dans un passeport par exemple, le fil de sécurité seul représente environ 3 fois le poids en dtex des deux fils de sécurité réunis contenus dans le fil hybride.

Les valeurs ci-dessus du fil hybride résulte d'un compromis permettant d'optimiser la vitesse de couture ou de broderie sans casse du fil, les performances radiofréquence RF et/ou des contraintes imposées par une norme ISO 14443 de transpondeurs sans-contact.

Ce fil de sécurité peut être associé ou adjoint au fil de sécurité autrement que par retordage. Il peut être aussi une attache ou assemblage quelconque des fils, par exemple une tresse à au moins trois fils. Les fils peuvent être notamment parallèles plutôt que sous forme de spirales et /ou assemblés par une matière thermocollante ou un fil thermocollant. Ainsi, par exemple le fil conducteur peut être gainé d'un isolant pouvant adhérer au fil de sécurité directement ou par le biais d'un adhésif. L'adhésif pouvant être introduit notamment sous forme de fil associé aux autres.

Le fil de sécurité peut être avantageusement métallique avec un ou plusieurs brins de différents métaux (or, argent, platine, cuivre, aluminium...). Ainsi, une soudure peut être réalisée de manière à mieux attacher son extrémité à un élément de circuit.

Sous l'effet d'une lampe UV, les particules sensibles 5 du fil de sécurité sont activées et émettent un rayonnement 6 visible.

A la figure 2, l'élément de circuit sécurisé 1 conforme à celui de la figure 1, est fixé sur un support 11 par une technique de couture à l'aide du fil 1 participant à la couture. Le fil conducteur sécurisé en cuivre 7 en position de fil de couture ou de broderie est maintenu avec un fil de canette 13.

D'autres techniques similaires ou équivalentes utilisant des fils de fixation telles que la broderie, le tricotage permettent également de fixer l'élément de circuit. Ainsi, par exemple le fil de canette 13 peut devenir un fil de broderie.

Alternativement, le fil de cannette 13 peut être permuté au fil conducteur sécurisé 1 de broderie ou de couture; Au moins un des fils participant à la couture ou broderie ou tricotage peut constituer le fil de sécurité tandis que l'autre peut constituer ou comprendre le fil conducteur. En fait, toute combinaison de ces fils est possible.

Pour renforcer la sécurité, le fil de cannette 13 peut être lui-même un fil de sécurité avec ou sans fil conducteur. II ajoute ainsi des moyens de marquage complémentaires au fil conducteur déjà sécurisé 1.

En alternative, l'élément de circuit 1 peut ne pas comprendre de fil de sécurité mais comprendre le fil conducteur seul ou associé à un fil tel une âme, le fil de sécurité étant apporté par assemblage ultérieur notamment par couture, broderie ou autre moyen d'assemblage, tel qu'un collage, etc.

Cette variante permet de découpler la technique de fabrication du conducteur linéaire 7 de celle du fil de sécurité. Ainsi par exemple, une piste métallisée obtenue par gravure électrochimique sur un support comme élément de circuit alors que la technique d'attache du fil de sécurité est par exemple une broderie.

Le fil de sécurité peut être attaché ou adjoint par toute technique de fixation de fil sur un support telle la couture, la broderie, l'incrustation à ultra-sons. La technique de sécurisation peut donc être librement choisie selon les avantages recherchés. Par exemple, avec la couture, ou broderie la mise en oeuvre est aisée et des gains de productivité peuvent être obtenus.

L'élément de circuit 1 peut être également incrusté dans le support notamment de type plastique par ultra-sons, rendant ainsi la séparation du fil de sécurité du fil conducteur encore plus délicat. La séparation peut également être empêchée également par un revêtement plastique, par exemple transparent autour de l'élément de circuit, voire une fusion des fils entre eux.

L'élément de circuit selon l'invention peut être également choisi notamment parmi une antenne ou un plot ou plage de connexion d'un composant électronique comme décrit ci-après.

Dans le cas d'une antenne, cette dernière peut être formée à partir du fil hybride, comme décrit précédemment.

Alternativement, l'antenne peut être réalisée de manière connue par technique d'incrustation par ultra-sons. De préférence, le fil de sécurité est incrusté avec le fil de sécurité. Le fil de sécurité peut être ajouté, le cas échéant, dans un deuxième temps après formation de l'antenne sur le support. En particulier, l'antenne peut être obtenue également par métallisation par gravure ou dépôt de matière conductrice, telle qu'une sérigraphie d'encre conductrice.

La figure 3 illustre un support sécurisé 15 conforme à un mode de réalisation de l'invention. Ce support comprend au moins un élément de circuit et un fil de sécurité comportant un moyen d'authentification. L'élément de circuit est une antenne 17 qui peut être obtenue à partir d'un fil conducteur ou hybride comme décrit précédemment.

Dans l'exemple, l'antenne est en fil hybride et est fixée sur le support par une technique de broderie. D'autres techniques de fixation évoquées ci-dessus peuvent convenir. Au moins une extrémité 19 de l'antenne est fixée à au moins un plot ou plage de connexion 21 d'un composant électronique 23 de manière que l'extrémité du fil de sécurité soit bloquée ou fixée sur le plot ou plage de connexion.

Le composant électronique est représenté par un module 23 à puce 25 de type sans-contact. Il comporte une puce sur un support 27 portant des plages de contact métallisées 29. Les plots 31 de la puce sont connectés aux plages de contact par tout moyen connu tel que soudure filaire, matière conductrice, par technique de puce retournée (fig. 7) ou non, etc.

Les figures 4 à 7 illustrent différentes façons d'attacher ou fixer un fil de sécurité à des plages de contact (voire des plots) d'un composant électronique ou reliées à lui.

La figure 4 est conforme à la figure 3 dans lequel l'attache est réalisée en cousant directement la plage métallique 21, le fil de sécurité traversant seul ou avec de préférence le fil conducteur une plage de connexion 21. Un enrobage 35 peut venir protéger les connexions soit de la puce seule soit également de l'extrémité d'antenne 19.

On observe que l'invention permet non seulement de sécuriser l'antenne elle même quand elle est associée à un fil de sécurité mais que l'antenne ainsi sécurisée permet également de sécuriser le composant électronique auquel elle est attachée et aussi le support en étant attaché à lui de manière par exemple en étant pris en sandwich entre deux feuilles de polycarbonates soudées entre elles ou une couture avec un autre fil d'attache de sécurité au support.

Sur la figure 5, l'extrémité 19 du conducteur sécurisé est attachée sur des plages de connexion 31 par une soudure thermo-compression 33 (ou autre moyen connu de connexion) effectuée sur les plages de connexion. Une résine d'enrobage peut venir recouvrir les extrémités non conductrices et conductrices et bloquer ainsi le fil de sécurité. Ce mode de réalisation ou mise en oeuvre est particulièrement avantageux pour effectuer des interconnexions sécurisée de composants sur un support, tel un module à plages de contact, une batterie, un afficheur, etc. Le fil hybride peut venir fixer le support au moins par endroit et comprendre des points de couture ou broderie ou de collage ou équivalents.

A la figure 6, ce sont deux surfaces de connexion qui sont reliées par un fil conducteur sécurisé conformément à l'invention. La soudure est une thermo compression. Le cas échéant, le fil hybride 1 peut être attaché à certain endroit du support isolant 27 notamment par couture ou broderie.

A la figure 7, la puce est montée en flip-chip contre des plages de connexion. Les extrémités 19 sont attachées par une colle conductrice anisotropique qui bloque l'ensemble puce, support et extrémités 19 de fil hybride. Alternativement, chaque plot peut recevoir une goutte de colle conductrice isotropique.

La soudure 33 sur le mode de réalisation de la figure 6, peut être effectuée par différentes techniques avec apport ou sans apport de matière, notamment un apport de colle conductrice 35, par exemple isotropique.

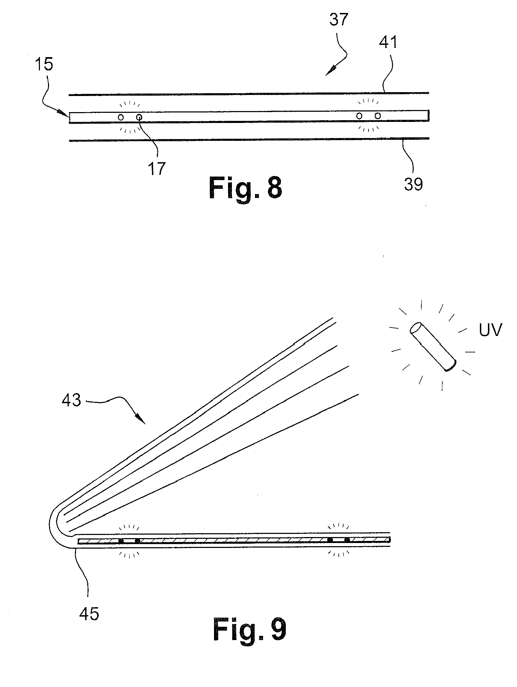

A la figure 8, le support obtenu 15 peut constituer tout ou partie d'un insert ou inlay 37 de type sans-contact. A cet effet, l'insert 15 peut recevoir une ou plusieurs feuilles laminées supplémentaires de protection ou couverture 37,39.

A la figure 9, le support 15 peut constituer tout ou partie d'un support d'identification tel un passeport électronique 43. L'insert peut être joint à une couverture 45 ou une feuille du passeport de préférence, le support ou au moins un revêtement le recouvrant est transparent de manière à laisser apparaître le fil de sécurité. La transparence peut être localisée sur au moins une partie de l'antenne pour permettre un contrôle visuel.

Dans le cas ou la feuille est opaque, d'autres agents sensibles peuvent être employés de manière à être détectés à travers la feuille opaque tel des agents magnétiques, métalliques, détectables par effet capacitif.
Le procédé de lamination d'un inlay, d'une carte ou d'un document permet d'enfermer l'antenne entre des couches inférieures et supérieures, ce procédé est falsifiable ou duplicable en cas de remplacement de l'inlay.
L'utilisation de couches transparentes lors de l'étape de lamination va permettre de voir l'antenne à l'oeil nu et de l'authentifier à l'aide d'un outil de détection.

## Revendications

1. Procédé de réalisation d'un élément de circuit électrique ou électronique sécurisé, dans lequel la sécurisation est obtenue à l'aide d'un moyen d'authentification associé à l'élément, **caractérisé en ce qu'**il comprend une étape d'association d'un fil de sécurité (3) directement à l'élément de circuit (7, 17, 21, 25, 31), le fil de sécurité comportant le moyen d'authentification (5).

2. Procédé selon la revendication précédente, **caractérisé en ce que** l'étape d'association est réalisée sur un fil conducteur (7) en tant qu'élément de circuit, en formant un fil hybride (1) comportant le fil de sécurité (3) et le fil conducteur (7).

3. Procédé selon la revendication 2, **caractérisé en ce que** le fil hybride (1), est obtenu par retordage d'au moins un fil de sécurité (3) avec au moins un fil conducteur (7).

4. Procédé selon l'une des revendications 2 ou 3, **caractérisé en ce que** le fil hybride, est obtenu par retordage d'au moins un fil conducteur autour d'au moins un fil d'âme (9) de manière que le fil conducteur soit enroulé en spirale autour du fil d'âme.

5. Procédé selon la revendication 1, **caractérisé en ce que** l'étape d'association s'effectue en cousant ou brodant l'élément de circuit sur un support (11, 15) à l'aide d'un fil de sécurité (1) participant à la couture ou la broderie.

6. Procédé selon la revendication 1, **caractérisé en ce que** l'élément de circuit est une antenne (17) et l'étape d'association est réalisée lors de l'élaboration du fil d'antenne sous forme de fil hybride (1), ledit fil hybride comportant au moins un fil de sécurité (3) et un fil conducteur (7).

7. Procédé de réalisation d'un support sécurisé, ledit support comprenant au moins un élément de circuit et un fil de sécurité associé au support, **caractérisé en ce que** la sécurisation du support (11, 15) s'effectue par l'intermédiaire d'un élément de circuit sécurisé (1, 17) associé au support, ledit circuit sécurisé étant conforme au procédé selon l'une des revendications précédentes.

8. Procédé selon la revendication 1, **caractérisé en ce que** l'élément de circuit comporte ou est relié à des plots ou plages de contact, et **en ce que** l'extrémité du fil de sécurité est attachée ou bloquée par une soudure sur le plot ou plage de connexion.

9. Elément de circuit électrique ou électronique sécurisé à l'aide d'un moyen d'authentification associé à l'élément, **caractérisé en ce qu'**il comprend un fil de sécurité (3) attaché à l'élément de circuit (7, 17, 21, 25, 29), le fil de sécurité comportant ledit moyen d'authentification (5).

10. Elément de circuit selon la revendication précédente, **caractérisé en ce qu'**il comprend un fil hybride comportant le fil de sécurité (3) et le fil conducteur (7).

11. Elément de circuit selon la revendication précédente, **caractérisé en ce que** le fil hybride, comporte au moins un fil de sécurité retordu avec au moins un fil conducteur.

12. Elément de circuit selon l'une des revendications 10 ou 11, **caractérisé en ce que** le fil hybride comporte le fil conducteur enroulé en spirale autour d'au moins un fil d'âme (9).

13. Elément de circuit selon l'une des revendications 9 à 12, **caractérisé en ce qu'**il est fixé sur un support par une technique de couture ou de broderie à l'aide d'un fil de sécurité (1) participant à la couture ou la broderie.

14. Elément de circuit selon l'une des revendications 9 à 13, **caractérisé en ce que** l'élément de circuit est choisi parmi un fil conducteur, une antenne (17), un plot ou plage de connexion (21, 29) d'un composant électronique (25).

15. Elément de circuit selon la revendication précédente, **caractérisé en ce que** l'antenne est formée à partir d'un fil hybride, ledit fil hybride comportant au moins un fil de sécurité et un fil conducteur.

16. Support sécurisé (1, 15, 27, 37, 43), ledit support comprenant au moins un élément de circuit et un fil de sécurité comportant un moyen d'authentification, **caractérisé en ce que** l'élément de circuit est conforme à l'une des revendications 9 à 15.

17. Support sécurisé selon la revendication précédente, comportant l'antenne en fil hybride, **caractérisé en ce qu'**au moins une extrémité de l'antenne ((19) est fixée à au moins un plot ou plage de connexion (21, 29) d'un composant électronique (25) de manière que l'extrémité du fil de sécurité soit bloquée sur la plage ou plot de connexion.

18. Support sécurisé selon la revendication précédente, **caractérisé en ce que** l'extrémité du fil de sécurité est bloquée par une soudure (33) sur le plot ou plage de connexion.

19. Support sécurisé comportant un élément de circuit électrique ou électronique selon l'une des revendications 9 à 18, **caractérisé en ce qu'**il constitue tout ou partie d'un insert (15) ou inlay sans contact.

20. Support sécurisé selon l'une des revendications 9 à 19 **caractérisé en ce qu'**il constitue tout ou partie d'un support d'identification tel qu'un passeport, une carte d'identité (37, 43, 45).
